# EUROPEAN PATENT SPECIFICATION

(11) **EP 3 105 647 B1**
(45) Date of publication and mention of the grant of the patent: **23.01.2019**
(21) Application number: 15748793.5
(22) Date of filing: 26.01.2015
(51) Int. Cl.: G05D 7/06

(54) **SYSTEM FOR AND METHOD OF PROVIDING PRESSURE INSENSITIVE SELF VERIFYING MASS FLOW CONTROLLER**
SYSTEM UND VERFAHREN ZUR BEREITSTELLUNG EINES DRUCKUNEMPFINDLICHEN SELBSTPRÜFENDEN MASSENDURCHFLUSSREGLERS
SYSTÈME ET PROCÉDÉ PERMETTANT DE PRODUIRE UN RÉGULATEUR DE DÉBIT MASSIQUE AUTOCONTRÔLÉ INSENSIBLE À LA PRESSION

(30) Priority: 13.02.2014 US 201414180063
(43) Date of publication of application: 21.12.2016
(73) Proprietor: MKS Instruments, Inc., Andover, MA 01810 (US)
(72) Inventor: DING, Junhua, Boxborough, MA 01719 (US); L'BASSI, Michael, Sterling, MA 01564 (US)
(74) Representative: Wegner, Hans
(86) International application number: PCT/US2015/012851
(87) International publication number: WO 2015/123008

(56) References cited:
- WO-A2-2013/134141
- US-A1- 2009 212 847
- US-A1- 2010 080 262
- US-A1- 2010 080 262
- US-A1- 2010 209 859
- US-A1- 2011 139 271
- US-A1- 2013 186 486
- US-A1- 2013 186 486

## Description

### BACKGROUND

### FIELD

This disclosure relates generally to mass flow controllers (MFCs), and more particularly to a system for and method of monitoring flow through MFCs in real time. As used herein the term "gas" includes the term "vapor(s)" should the two terms be considered different.

### OVERVIEW

Mass flow controllers (MFCs) are devices for measuring and controlling the flow of gases. They are usually used to control the flow of gases during a semiconductor manufacturing process wherein the flow of gases into a semiconductor tool, such as a vacuum chamber, must be carefully controlled in order to produce high yield semiconductor products. MFCs are usually designed and calibrated to control specific types of gas at particular ranges of flow rates. The devices control the rate of flow based on a given setpoint, usually predetermined by the user or an external device such as the semiconductor tool itself. MFCs can be either analog or digital. They are typically designed to be used with pressure ranges of the inlet gases, with low pressure and high pressure MFCs being available. All MFCs have an inlet port, outlet port, a mass flow meter including a mass flow sensor and a proportional control valve. A system controller is used as a part of a feedback control system that provides a control signal to the control valve as a function of a comparison of the flow rate as determined by the setpoint with the measured flow rate as sensed by the mass flow sensor. The feedback control system thus operates the valve so that the measured flow is maintained at the flow rate as determined by the setpoint.

Such control systems assume that the MFC remains in calibration within certain tolerances. In order to test whether flow rates of a MFC are within the tolerances of calibration, the MFC is typically tested offline with such devices as mass flow verifiers. While offline testing is very accurate, there is always a problem that a MFC can become out of calibration during the running of a process (in real time), and not be detected until the process is completed. Often this can result in lower yields of semiconductor product, and even a complete failure resulting in the loss of the entire product yield. This can be expensive, and is clearly undesirable. What is needed is a device and method for continually testing the calibration settings of a MFC in real time while processes are being run.

### DESCRIPTION OF RELATED ART

Reference is made to Japanese Published Application 2004-246826A2004.9.2

US 2010/0080262 A1 discloses a system and method for operating a mass flow controller is described. One embodiment validates the operation of a mass flow controller thermal sensor, including detecting zero drift and span drift in the sensor by comparing the thermal sensor output to a pressure sensor output. In one embodiment, each sensor provides a signal to a digital controller or other processing unit and the controller calculates the mass flow rates of a gas flowing through the unit as measured by the sensors. The mass flow rates may then be compared to determine if one of the thermal sensor is operating properly.

US 2013/0186486 A1 relates to a mass flow controller comprising: a first flow meter constructed and arranged to measured flow rate of mass through the mass flow controller; a second flow meter constructed and arranged to measure flow rate of mass through the mass flow controller; a control valve constructed and arranged so as to control the flow rate of mass through the mass flow controller in response to a control signal generated as a function of the flow rate as measured by one of the flow meters; and a system controller constructed and arranged to generate the control signal, and to provide an indication when a difference between the flow rate of mass as measured by the first flow meter and the flow rate of mass as measured by the second flow meter exceeds a threshold.

US 2010/0209859 A1 relates to an apparatus for supplying a hydrogen gas to a quartz glass manufacturing apparatus, which can include a burner, a first hydrogen supply system, a second hydrogen supply system, a flow rate control section including: a valve, a first flow rate measuring section and a control section that controls the valve in such a manner that a measured value obtained by the first flow rate measuring section approaches a set value input from outside.

### SUMMARY

The underlying problem of the present invention is solved by the subject-matter of the independent claims.

A mass flow controller comprises: a pressure-based flow meter, a thermal-based flow meter, a control valve, and a system controller. The pressure-based flow meter is constructed and arranged to measure the flow rate of mass through the mass flow controller. The thermal-based flow meter is constructed and arranged to measure flow rate of mass through the mass flow controller. The control valve is constructed and arranged so as to control the flow rate of mass through the mass flow controller in response to a control signal generated as a function of the flow rate as measured by one of the flow meters. And the system controller is constructed and arranged to generate the control signal as a function of the flow rate as measured by thermal-based flow meter when the measured flow rate is relatively low, and generate the control signal as a function of the flow rate as measured by the pressure-based flow meter when the flow rate is relatively high so that the mass flow controller is relatively insensitive to inlet pressure perturbations.

A method of controlling the mass flow rate of a gas, comprising: measuring the flow rate of mass through the mass flow controller with a thermal-based flow meter; measuring the flow rate of mass through the mass flow controller with a pressure-based flow meter; controlling the flow rate of mass through the mass flow controller with a control valve in response to a control signal generated as a function of the flow rate as measured by one of the flow meters; wherein controlling the flow rate of mass includes generating the control signal as a function of (a) the flow rate as measured by thermal-based flow meter when the measured flow rate is relatively low, and (b) the flow rate as measured by the pressure-based flow meter when the flow rate is relatively high so that the mass flow meter is relatively insensitive to inlet pressure perturbations.

A comparison of the flow measurements of the thermal-based and the pressure-based flow meters can be used to (a) sense pressure disturbances at low flow rates so that the mass flow controller generate the control signal as a function of the flow rate measured by the pressure-based flow meter at low flow rates while the pressure disturbances are being sensed, and (b) sense when the thermal-based flow meter is out of calibration so that a zero offset signal can be applied to the thermal-based flow meter.

These, as well as other components, steps, features, objects, benefits, and advantages, will now become clear from a review of the following detailed description of illustrative embodiments and the accompanying drawings.

### BRIEF DESCRIPTION OF DRAWINGS

The drawings disclose illustrative embodiments. They do not set forth all embodiments. Other embodiments may be used in addition or instead. Details which may be apparent or unnecessary may be omitted to save space or for more effective illustration. Conversely, some embodiments may be practiced without all of the details which are disclosed. When the same numeral appears in different drawings, it refers to the same or like components or steps.
Fig. 1 is a simplified block diagram of a MFC constructed and arranged to control flow through the MFC and monitor the accuracy of the MFC in real time;
Fig. 2 is a block diagram of an embodiment of a MFC employing the teachings described herein; and
Fig. 3 is a block diagram of components for generating a signal indicating when a MFC, such as the ones described in connection with Figs. 1 and 2 are out of calibration tolerances; and
Fig. 4 is a block diagram of an embodiment of a MFC that is pressure insensitive.

### DETAILED DESCRIPTION OF ILLUSTRATIVE EMBODIMENTS

Illustrative embodiments are now discussed. Other embodiments may be used in addition or instead. Details which may be apparent or unnecessary may be omitted to save space or for a more effective presentation. Conversely, some embodiments may be practiced without all of the details which are disclosed.

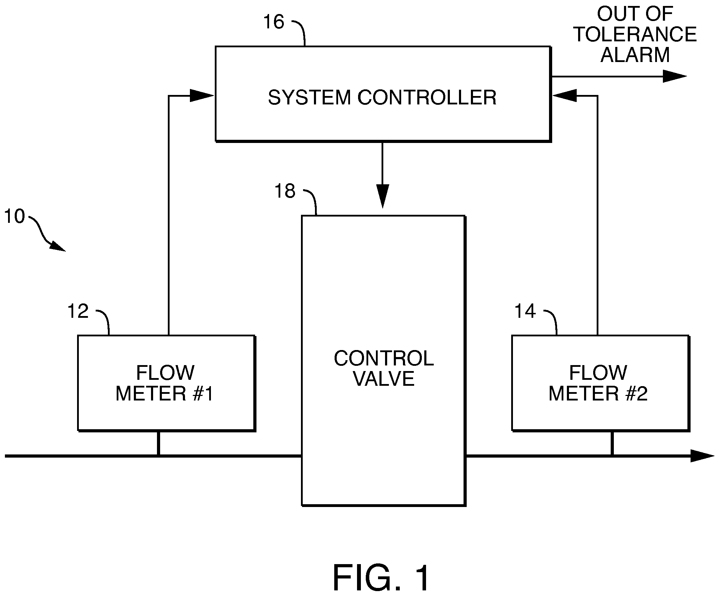

Referring to Fig. 1, the illustrated, exemplary mass flow controller 10 is constructed and arranged to control flow through the MFC and monitor the accuracy of the MFC in real time. As shown the mass flow controller 10 includes two flow meters 12 and 14, each independently generating a signal representing the measured rate of flow of gas through the MFC. The outputs of the two flow meters are provided to the system controller 16. The system controller 16 processes the two signals received from the two flow meters 12 and 14 and provides a control signal to the proportional control valve 18 based on the flow measured by one of the flow meters and a set point, and an indication ("alarm") signal when a determination is made that the difference in the flow rates as measured by the two meters exceeds a predetermined threshold.

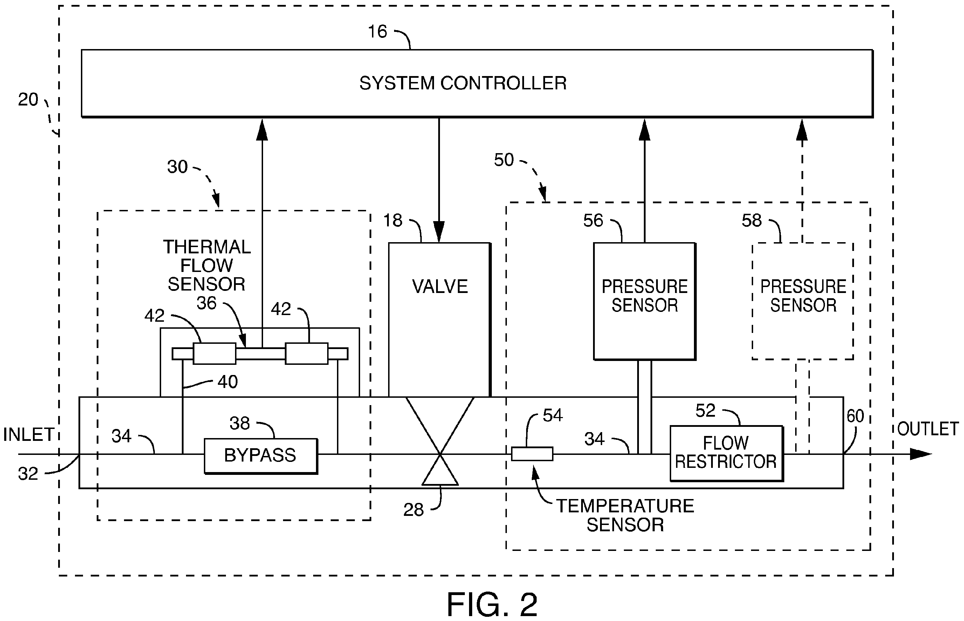

A more detailed exemplary embodiment of a MFC, indicated generally at 20, is shown in Fig. 2. The MFC 20 is constructed and arranged so as to control flow through the MFC and monitor the accuracy of the MFC in real time. As shown gas is received at the input port 32 of block 28, which in turn includes a conduit defining the main flow path 34 through the MFC to the outlet port 60. The first flow meter 30 is shown as a thermal mass flow meter. Thermal mass flow meters typically include a thermal mass flow sensor 36. The latter usually includes a bypass element 38 disposed in the bypass of the main flow path 34 of the gas flow through the block 28. A U-shaped capillary tube 40 has opposite ends respectively connected to the primary pathway at the upstream and downstream ends of the bypass element 38. One or more resistance elements 42 (two being the most common) are used to measure flow through the capillary tube based on temperature measurements as a function, in the example, of the difference in resistances of the two resistance elements, which in turn is a function of the difference in the sense temperatures of the fluid, a measure of the mass flow rate. The bypass element 38 is designed to ensure that gas flow through the bypass element 38 between the two ends of the capillary tube 40 is laminar. By maintaining laminar flow, the measured flow rate of gas through the capillary tube will be an accurate percentage of the flow through the main flow path 34. Thus, the sensed flow rate through the capillary tube 40 will be an accurate measure of the flow rate though the MFC 20 and exiting outlet port 60. Data representing the sensed flow rate is communicated to the system controller 16.

The second flow meter 50 is shown as a differential pressure flow meter. For choked flow conditions, the flow meter 50 includes a flow restrictor 52 (for example, a critical flow nozzle or orifice), and a temperature sensor 54 and an upstream pressure sensor 56 arranged to measure the respective temperature and pressure of the gas flowing through the main flow path 34 upstream from the flow restrictor 52. Data representing the sensed temperature and pressure is transmitted to the system controller for use in determining mass flow through the second flow meter 50 as function of these sensed measurements. For non-choked flow conditions, a second or downstream pressure sensor 58 is provided on the downstream side of the flow restrictor 52. Data representing the sensed temperature, upstream pressure and downstream pressure is transmitted to the system controller 16 for determining the rate of mass flow through the second meter 50 as a function of the sensed measurements. The second measurement provided by the second flow meter 50 (in both the choked and non-choked embodiments) is independent of the measurement provided by the first flow meter 30.

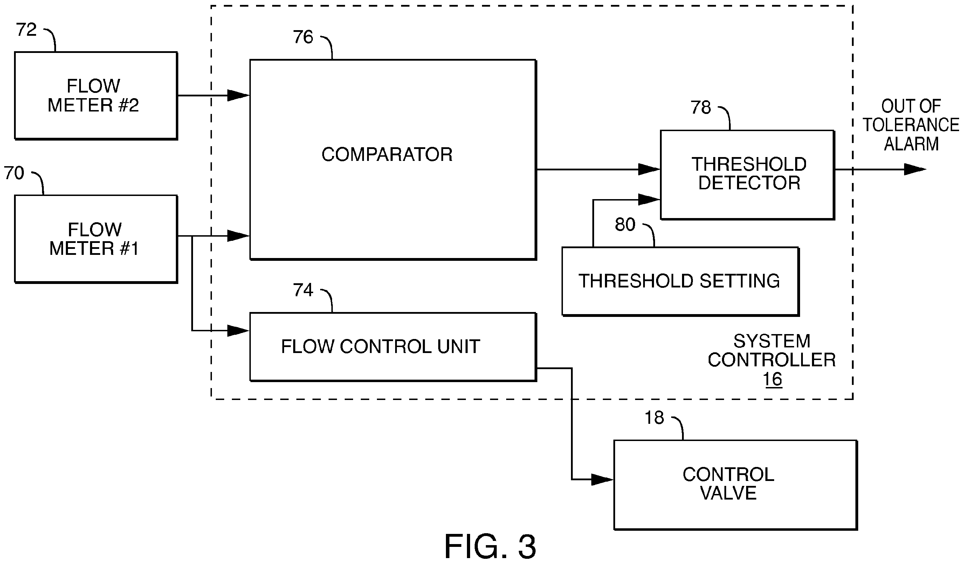

Referring to Fig. 3, the system controller 16 processes the outputs of the flow meters 70 and 72 so as to provide two flow measurements of the same flow through the MFC. As shown flow meter 70 is provided to a flow control unit 74, which in turn applies a control signal to the proportional control valve 18. A comparator 76 is provided to compare the data representing the sensed flow measurements provided by the two meters 70 and 72 to provide an output signal as a function of and representing any difference between the two measurements. This output signal is compared to some threshold value (provided by threshold setting 80) by a threshold detector 78. Should the output signal of comparator 76 exceed the threshold value (wherein the two meters provide different flow measurements such that the difference between the two exceed a predetermined threshold), the threshold detector provides an alarm or indicating signal to alert the user that at least one of the meters is inaccurate, and that the MFC should be taken off line and further tested. It should be noted that the value of the threshold setting at 80 can be provided in anyone of a number of ways including setting the value during the initial factory setup of the MFC, or user programmed. The threshold value can be set as a function of permissible tolerances in mass flow for the particular process with which the controller is used to deliver gas. Thus, some processes may permit greater tolerances in flow than others.

While the first and second flow meters have been respectively described as a thermal mass flow meter and a differential pressure flow meter in Fig. 2, they can be other types of flow meters as well, such as coriolis flow meter, magnetic flow meter or ultrasonic flow meter, depending on the application for which the MFC 20 is intended. Although it is preferred that the type of the first flow meter is different from that of the second flow meter, the two flow meters can be same type. For example, both flow meters can be either thermal mass flow meters or differential pressure flow meters. Further, although the first flow meter 30 is located upstream to the control valve 18 and the second flow meter is located downstream to the control valve 18, the locations of these two flow meters can be anywhere along the main flow path 34 of the MFC. For example, both flow meters can be upstream or downstream to the control valve 18.

As shown in Fig. 3, while the measurement from the first flow meter 70 is used in the flow control unit 74 to control the MFC flow output and the measurement from the second flow meter 72 is used to verify the accuracy of the MFC in real time, the measurement from the second flow meter 72 can be used in the flow control unit 74 to control the flow output of the MFC 20 and the measurement from the first flow meter 70 be used for flow verification.

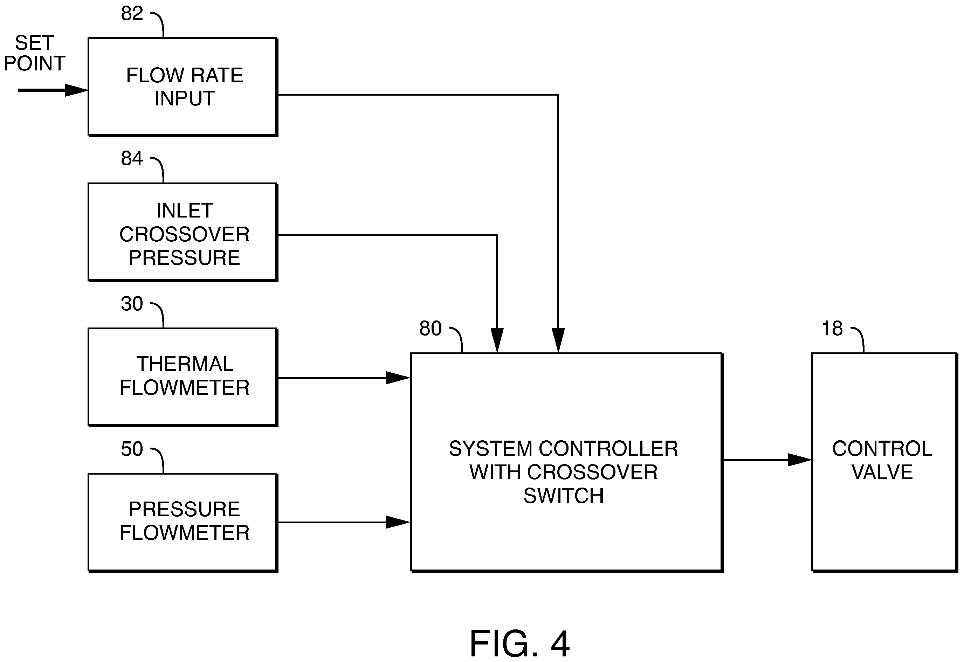

The various embodiments of the MFC described herein can be further configured to provide pressure insensitive operation and greater accuracy of control throughout the flow range of the MFC. In general, pressure-based flow meters and thus pressure-based flow control are insensitive to pressure disturbances or perturbations at the inlet of the MFC. However, pressure-based flow meters are not very accurate at low flow rates and low inlet pressures compared to thermal mass flow meters. Accordingly, in one embodiment, shown in Fig. 4, the system controller 80 is configured and arranged similarly to controller 16 of Fig. 2, and further configured to switch between the two flow meters so as to control the position of the control valve 18 depending on the inlet pressure and flow rate through the MFC. In the Fig. 4 embodiment, the output of thermal-based flow meter 30 can be used to control the control valve 18 for relatively low flow rates, and the output of the pressure-based flow meter 50 can be used to control the control valve for relatively high flow rates. More specifically, in one embodiment the cross over point or value is determined as a predetermined percentage of the full scale rate of flow to which the flow meters are designed. The predetermined percentage number is selected as a function of the expected range of pressures of the gas flowing through the meters. Thus, when the flow rate through the MFC is determined to be less than the predetermined percentage of full scale (FS), the output of the thermal-based flow meter is used to control the control valve 18; and when the flow rate through the MFC is determined to be more than the predetermined percentage of full scale, the output of the pressure-based flow meter is used to control the control valve 18. Either flow meter can be used to control the control valve when the flow rate equals the cross-over value

In one implementation, the user can determine the cross over value in percentage of full scale, and provide the value as an input at 84 to the system controller 80. Alternatively, it can be provided during manufacture of the MFC.

Thus, in one example, for flow rates less than 20% of full scale, the controller 80 will apply the output of the thermal-based flow-meter 30 to the control valve 18, and for flow rates equal to and greater than 20% full scale, the controller 80 will apply the output of the pressure-based flow meter 50 to the control valve 18. By using the thermal-based flow meter 30 to control the MFC at relatively low flow rates, the accuracy of the flow control is improved in low flow rates.

When the MFC uses pressure-based sensor measurement to control the flow through control valve, it is a pressure insensitive MFC, i.e. substantially insensitive to pressure disturbances at the inlet. However when the MFC uses thermal-based sensor measurement to control the flow, it is sensitive to inlet pressure disturbances. Accordingly, one additional feature of the disclosed MFC is to provide compensation for pressure disturbances that occur when the MFC is using thermal-based measurements to control flow. Specifically, when the mass flow control uses thermal flow sensor measurement within a low flow range and there is a pressure disturbance indicated by the sudden big flow deviation between the two flow sensors, the system controller senses the pressure disturbance, and with the controller 80 temporarily switches the flow control input from the thermal flow sensor measurement to the pressure-based flow measurement until the pressure transient period is gone. What constitutes a sudden "big flow deviation between the two flow sensors" can be determined, for example, by setting a threshold so that the deviation must exceed the threshold to be considered sufficient to warrant the change. When the deviation exceeds the threshold, the switching occurs from the thermal flow measurement to pressure-based flow measurement. When the deviation falls below the threshold, the controller 80 switches pressure-based flow measurement back to thermal flow measurement.

In general, the output of the thermal flow meter tends to drift more than the pressure flow meter. As a result the thermal flow meter is initially calibrated by the user or at the factory to provide zero offset, i.e. the output of the thermal flow meter is calibrated with a zero offset signal so that the output of the thermal flow meter is zero with zero input. However, during use, the thermal flow meter can fall out of calibration and provide erroneous readings. Accordingly, the MFC can also be configured to sense when the thermal flow meter falls out of calibration and automatically adjust the zero offset. This can be accomplished for example by assuming that should the readings of the two flow meters differ by a predetermined permitted tolerance or amount, the thermal flow meter is assumed to be out of calibration. Accordingly the outputs of the thermal flow meter and pressure flow meter can be continually compared (even though only one flow meter controls the control value 18 at any one time during flow operations) to determine whether the thermal flow meter has fallen out of calibration. Should the output reading of the thermal flow meter vary from the output reading of the pressure flow meter by a predetermined amount, then a zero offset adjust signal can be provided by the system controller to the thermal flow meter as illustrated in FIG. 4. In general is preferable that the zero offset for the thermal flow sensor only be adjusted when the flow is above a cross-over value of the crossover switch, e.g., 20%FS since the pressure-based sensor may not provide an accurate measurement for low flow range adjustment for the flow below the 20%FS crossover, and thus a comparison of the outputs of the two flow meters may not be accurate.

It should be noted that the derivative of the two flow measurements can be used to distinguish the compared difference between the two flow measurements due to pressure disturbances, and those due to a need to calibrate the offset. In the former situation, the derivative changes rather quickly due to the rapid change in the comparative difference between the two flow measurements, while in the latter situation the derivative changes rather slowly.

The mass flow controller employing all of the features described herein has several advantages. Switching flow measurement based on the flow range for mass flow utilizes the best accuracy of both flow sensors. In addition, a pressure insensitive MFC is provided for the full flow range even without an upstream pressure sensor. Finally, self-correction can improve the accuracy of thermal flow sensor measurement which is prone to zero drift.

The components, steps, features, objects, benefits and advantages which have been discussed are merely illustrative. None of them, or the discussions relating to them, is intended to limit the scope of protection in any way. Numerous other embodiments are also contemplated. These include embodiments which have fewer, additional, and/or different components, steps, features, objects, benefits and advantages. These also include embodiments in which the components and/or steps are arranged and/or ordered differently.

Unless otherwise stated, all measurements, values, ratings, positions, magnitudes, sizes, and other specifications which are set forth in this specification, including in the claims which follow, are approximate, not exact. They are intended to have a reasonable range which is consistent with the functions to which they relate and with what is customary in the art to which they pertain.

## Claims

1. A mass flow controller (20) comprising:
a pressure-based flow meter (50) constructed and arranged to measure the flow rate of mass through the mass flow controller (20);
a thermal-based flow meter (30) constructed and arranged to measure flow rate of mass through the mass flow controller (20);
a control valve (18) constructed and arranged so as to control the flow rate of mass through the mass flow controller (20) in response to a control signal generated as a function of the flow rate as measured by one of the flow meters (50; 30);
an inlet (32) for receiving a gas; and
a system controller (16) configured with a cross-over value, wherein the system controller (16) generates the control signal as a function of the flow rate measured by the thermal-based flow meter (30) when the measured flow rate is below the cross-over value, and generates the control signal as a function of the flow rate measured by the pressure-based flow meter (50) when the measured flow rate is greater than the cross-over valve,
**characterised in that**
the system controller (16) is further constructed and arranged to
(a) generate the control signal as a function of the flow rate as measured by the thermal-based flow meter (30) when the measured flow rate is relatively low and there are no pressure disturbances at the inlet (32),
(b) change so as to generate the control signal as a function of the flow rate as measured by the pressure-based flow meter (50) when the measured flow rate is relatively low and there is a pressure disturbance at the inlet (32), and
(c) generate the control signal as a function of the flow rate as measured
by the pressure-based flow meter (50) when the flow rate is relatively high, so that the mass flow controller (20) is relatively insensitive to inlet pressure perturbations.

2. The mass flow controller (20) according to claim 1, wherein the cross-over value is selected as a function of the range of flow to which the mass flow controller (20) controls.

3. The mass flow controller (20) according to claim 1, wherein the cross-over value is manually entered.

4. The mass flow controller (20) according to claim 1, wherein the cross-over value is factory installed.

5. The mass flow controller (20) according to claim 1, wherein the pressure disturbance is indicated by a sudden big flow deviation between the thermal-based flow meter (30) and the pressure-based flow meter (50).

6. The mass flow controller (20) according to claim 1, the outputs of the thermal-based flow meter (30) and pressure-based flow meter (50) are compared to determine whether the thermal flow meter (30) has fallen out of calibration.

7. The mass flow controller (20) according to claim 7, wherein a zero offset adjust signal is provided to the thermal flow meter (30) when the output reading of the thermal flow meter varies from the output reading of the pressure flow meter by a predetermined amount.

8. A method of controlling the mass flow rate of a gas with a mass flow controller (20), comprising;
measuring the flow rate of mass through the mass flow controller (20) with a thermal-based flow meter (30);
measuring the flow rate of mass through the mass flow controller (20) with a pressure-based flow meter (50);
controlling the flow rate of mass through the mass flow controller (20) with a control valve in response to a control signal generated as a function of the flow rate as measured by one of the flow meters (50; 30);
wherein controlling the flow rate of mass includes generating the control signal as a function of the flow rate as measured by the thermal-based flow meter (30) when the measured flow rate is below a cross over value, and the flow rate as measured by the pressure-based flow meter (50) when the flow rate is above the cross-over value,
**characterised in that**
controlling the flow rate of mass further includes generating the control signal as a function of
(a) the flow rate as measured by the thermal-based flow meter (30) when the measured flow rate is relatively low and there are no pressure disturbances at an inlet (32) for receiving a gas of the mass flow controller (20), and
(b) the flow rate as measured by the pressure-based flow meter (50) when the flow rate is relatively low and there are pressure disturbances at the inlet (32), and
(c) the flow rate as measured by the pressure-based flow meter (20) when the flow rate is relatively high,
so that the mass flow meter (20) is relatively insensitive to inlet pressure perturbations.

9. The method according to claim 8, wherein the cross-over value is selected as a function of the range of flow to be controlled.

10. The method according to claim 8, wherein the cross-over value is manually entered.

11. The method according to claim 8, wherein the cross-over value is factory installed.

12. The method according to claim 8, wherein a pressure disturbance is indicated by a sudden big flow measurement deviation between the two flow sensors.

13. The method according to claim 12, wherein a sudden big flow deviation occurs when the deviation exceeds the threshold.

14. The method according to claim 8, further including comparing the outputs of the thermal flow meter and pressure flow meter to determine whether the thermal flow meter has fallen out of calibration.

15. The method according to claim 14, further including providing a zero offset adjust signal to the thermal flow meter when the output reading of the thermal flow meter varies from the output reading of the pressure flow meter by a predetermined amount.

## Patentansprüche

1. Massendurchflussregler (20), umfassend:
einen druckbasierten Durchflussmesser (50), der konstruiert und angeordnet ist, um die Durchflussrate der Masse durch den Massendurchflussregler (20) zu messen;
einen thermischen Durchflussmesser (30), der konstruiert und angeordnet ist, um die Durchflussrate der Masse durch den Massendurchflussregler (20) zu messen;
ein Steuerventil (18), das so konstruiert und angeordnet ist, dass es die Durchflussrate der Masse durch den Massendurchflussregler (20) als Antwort auf ein Steuersignal steuert, das als Funktion der von einem der Durchflussmesser (50; 30) gemessenen Durchflussrate erzeugt wird;
einen Einlass (32) zum Aufnehmen eines Gases; und
eine Systemsteuerung (16), die mit einem Übergangswert konfiguriert ist, wobei die Systemsteuerung (16) das Steuersignal als Funktion der vom thermischen Durchflussmesser (30) gemessenen Durchflussrate erzeugt, wenn die gemessene Durchflussrate unter dem Übergangswert liegt, und das Steuersignal als Funktion der vom druckbasierten Durchflussmesser (50) gemessenen Durchflussrate erzeugt, wenn die gemessene Durchflussrate größer als der Übergangswert ist,
**dadurch gekennzeichnet, dass**
die Systemsteuerung (16) weiterhin konstruiert und angeordnet ist zum
(a) Erzeugen des Steuersignals als Funktion der vom thermischen Durchflussmesser (30) gemessenen Durchflussrate, wenn die gemessene Durchflussrate relativ niedrig ist und keine Druckstörungen am Einlass (32) vorliegen,
(b) Ändern, um das Steuersignal als Funktion der vom druckbasierten Durchflussmesser (50) gemessenen Durchflussrate zu erzeugen, wenn die gemessene Durchflussrate relativ niedrig ist und eine Druckstörung am Einlass (32) vorliegt, und
(c) Erzeugen des Steuersignals als Funktion der vom druckbasierten Durchflussmesser (50) gemessenen Durchflussrate, wenn die Durchflussrate relativ hoch ist,
so dass der Massendurchflussregler (20) relativ unempfindlich gegenüber Einlassdruckstörungen ist.

2. Massendurchflussregler (20) nach Anspruch 1, wobei der Übergangswert als Funktion vom Durchflussbereich, den der Massendurchflussregler (20) steuert, ausgewählt wird.

3. Massendurchflussregler (20) nach Anspruch 1, wobei der Übergangswert manuell eingegeben ist.

4. Massendurchflussregler (20) nach Anspruch 1, wobei der Übergangswert werkseitig installiert ist.

5. Massendurchflussregler (20) nach Anspruch 1, wobei die Druckstörung durch eine plötzliche große Durchflussabweichung zwischen dem thermischen Durchflussmesser (30) und dem druckbasierten Durchflussmesser (50) angezeigt wird.

6. Massendurchflussregler (20) nach Anspruch 1, wobei die Ausgänge des thermischen Durchflussmessers (30) und des druckbasierten Durchflussmessers (50) verglichen werden, um zu bestimmen, ob die Kalibrierung des thermischen Durchflussmessers (30) ausgefallen ist.

7. Massendurchflussregler (20) nach Anspruch 7, wobei dem thermischen Durchflussmesser (30) ein Null-Offset-Einstellungssignal bereitgestellt wird, wenn der Ausgangswert des thermischen Durchflussmessers von dem Ausgangswert des druckbasierten Durchflussmessers um einen vorbestimmten Betrag abweicht.

8. Verfahren zum Steuern der Massendurchflussrate eines Gases mit einem Massendurchflussregler (20), umfassend;
Messen der Durchflussrate der Masse durch den Massendurchflussregler (20) mit einem thermischen Durchflussmesser (30);
Messen der Durchflussrate der Masse durch den Massendurchflussregler (20) mit einem druckbasierten Durchflussmesser (50);
Steuern der Durchflussrate der Masse durch den Massendurchflussregler (20) mit einem Steuerventil als Antwort auf ein Steuersignal, das als Funktion der von einem der Durchflussmesser (50; 30) gemessenen Durchflussrate erzeugt wird;
wobei das Steuern der Durchflussrate der Masse das Erzeugen des Steuersignals beinhaltet, als Funktion des Durchflussrate, wie sie durch den thermischen Durchflussmesser (30) gemessen wird, wenn die gemessene Durchflussrate unter einem Übergangswert liegt, und als Funktion des Durchflussrate, wie sie durch den druckbasierten Durchflussmesser (50) gemessen wird, wenn die Durchflussrate über dem Übergangswert liegt,
**dadurch gekennzeichnet, dass** das Steuern der Durchflussrate der Masse ferner das Erzeugen des Steuerungssignals beinhaltet als Funktion von
(a) der vom thermischen Durchflussmesser (30) gemessenen Durchflussrate, wenn die gemessene Durchflussrate relativ niedrig ist und keine Druckstörungen an einem Einlass (32) vorliegen zum Aufnehmen eines Gases
zum Massendurchflussregler (20),
(b) der vom druckbasierten Durchflussmesser (50) gemessenen Durchflussrate, wenn die gemessene Durchflussrate relativ niedrig ist und eine Druckstörung am Einlass (32) vorliegt, und
(c) der vom druckbasierten Durchflussmesser (20) gemessenen Durchflussrate, wenn die Durchflussrate relativ hoch ist, so dass der Massendurchflussregler (20) relativ unempfindlich gegenüber Einlassdruckstörungen ist.

9. Verfahren nach Anspruch 8, wobei der Übergangswert als Funktion vom Durchflussbereich ausgewählt wird.

10. Verfahren nach Anspruch 8, wobei der Übergangswert manuell eingegeben ist.

11. Verfahren nach Anspruch 8, wobei der Übergangswert werkseitig installiert ist.

12. Verfahren nach Anspruch 8, wobei eine Druckstörung durch eine plötzliche große Durchflussmessabweichung zwischen den beiden Durchflusssensoren angezeigt wird.

13. Verfahren nach Anspruch 12, wobei eine plötzliche große Durchflussabweichung auftritt, wenn die Abweichung den Schwellwert überschreitet.

14. Verfahren nach Anspruch 8, ferner beinhaltend Vergleichen der Ausgänge des thermischen Durchflussmessers und des druckbasierten Durchflussmessers, um zu bestimmen, ob die Kalibrierung des thermischen Durchflussmessers ausgefallen ist.

15. Verfahren nach Anspruch 14, ferner beinhaltend Bereitstellen eines Null-Offset-Einstellungssignal zum thermischen Durchflussmesser, wenn der Ausgangswert des thermischen Durchflussmessers von dem Ausgangswert des druckbasierten Durchflussmessers um einen vorbestimmten Betrag abweicht.

## Revendications

1. Régulateur de débit massique (20) comprenant :
un débitmètre basé sur la pression (50) construit et agencé pour mesurer le débit de masse à travers le régulateur de débit massique (20) ;
un débitmètre à base thermique (30) construit et agencé pour mesurer le débit de masse à travers le régulateur de débit massique (20) ;
une vanne de régulation (18) construite et agencée de façon à réguler le débit de masse à travers le régulateur de débit massique (20) en réponse à un signal de régulation généré en fonction du débit tel que mesuré par l'un des débitmètres (50 ; 30) ;
une entrée (32) pour recevoir un gaz ; et
un régulateur de système (16) configuré avec une valeur de transition, dans lequel le régulateur de système (16) génère le signal de régulation en fonction du débit mesuré par le débitmètre à base thermique (30) lorsque le débit mesuré est inférieur à la valeur de transition, et génère le signal de régulation en fonction du débit mesuré par le débitmètre basé sur la pression (50) lorsque le débit mesuré est supérieur à la valeur de transition,
**caractérisé en ce que**
le régulateur de système (16) est en outre construit et agencé pour
(a) générer le signal de régulation en fonction du débit tel que mesuré par le débitmètre à base thermique (30) lorsque le débit mesuré est relativement bas et qu'il n'existe pas de perturbations de pression au niveau de l'entrée (32),
(b) changer de façon à générer le signal de régulation en fonction du débit tel que mesuré par le débitmètre basé sur la pression (50) lorsque le débit mesuré est relativement bas et qu'il existe une perturbation de pression au niveau de l'entrée (32), et
(c) générer le signal de régulation en fonction du débit tel que mesuré par le débitmètre basé sur la pression (50) lorsque le débit est relativement élevé,
de sorte que le régulateur de débit massique (20) est relativement insensible aux perturbations de pression à l'entrée.

2. Régulateur de débit massique (20) selon la revendication 1, dans lequel la valeur de transition est choisie en fonction de la plage de débit à laquelle le régulateur de débit massique (20) effectue la régulation.

3. Régulateur de débit massique (20) selon la revendication 1, dans lequel la valeur de transition est saisie manuellement.

4. Régulateur de débit massique (20) selon la revendication 1, dans lequel la valeur de transition est installée en usine.

5. Régulateur de débit massique (20) selon la revendication 1, dans lequel la perturbation de pression est indiquée par un important écart de débit soudain entre le débitmètre à base thermique (30) et le débitmètre basé sur la pression (50).

6. Régulateur de débit massique (20) selon la revendication 1, les sorties du débitmètre à base thermique (30) et du débitmètre basé sur la pression (50) sont comparées pour déterminer si le débitmètre thermique (30) n'est plus étalonné correctement.

7. Régulateur de débit massique (20) selon la revendication 7, dans lequel un signal d'ajustement à décalage d'origine est fourni au débitmètre thermique (30) lorsque la lecture en sortie du débitmètre thermique diffère de la lecture en sortie du débitmètre basé sur la pression d'une quantité prédéterminée.

8. Procédé de régulation du débit massique d'un gaz avec un régulateur de débit massique (20), comprenant ;
la mesure du débit de masse à travers le régulateur de débit massique (20) avec un débitmètre à base thermique (30) ;
la mesure du débit de masse à travers le régulateur de débit massique (20) avec un débitmètre basé sur la pression (50) ;
la régulation du débit de masse à travers le régulateur de débit massique (20) avec une vanne de régulation en réponse à un signal de régulation généré en fonction du débit tel que mesuré par l'un des débitmètres (50 ; 30) ;
dans lequel la régulation du débit de masse inclut la génération du signal de régulation en fonction du débit tel que mesuré par le débitmètre à base thermique (30) lorsque le débit mesuré est inférieur à une valeur de transition, et du débit tel que mesuré par le débitmètre basé sur la pression (50) lorsque le débit est supérieur à la valeur de transition,
**caractérisé en ce que**
la régulation du débit de masse inclut en outre la génération du signal de régulation en fonction
(a) du débit tel que mesuré par le débitmètre à base thermique (30) lorsque le débit mesuré est relativement bas et qu'il n'existe pas de perturbations de pression au niveau d'une entrée (32) pour recevoir un gaz du régulateur de débit massique (20), et
(b) du débit tel que mesuré par le débitmètre basé sur la pression (50) lorsque le débit est relativement bas et qu'il existe des perturbations de pression au niveau de l'entrée (32), et
(c) du débit tel que mesuré par le débitmètre basé sur la pression (20) lorsque le débit est relativement élevé,
de sorte que le débitmètre massique (20) est relativement insensible aux perturbations de pression à l'entrée.

9. Procédé selon la revendication 8, dans lequel la valeur de transition est choisie en fonction de la plage de débit à réguler.

10. Procédé selon la revendication 8, dans lequel la valeur de transition est saisie manuellement.

11. Procédé selon la revendication 8, dans lequel la valeur de transition est installée en usine.

12. Procédé selon la revendication 8, dans lequel une perturbation de pression est indiquée par un important écart de mesure de débit soudain entre les deux capteurs de débit.

13. Procédé selon la revendication 12, dans lequel un important écart de débit soudain a lieu lorsque l'écart dépasse le seuil.

14. Procédé selon la revendication 8, incluant en outre la comparaison des sorties du débitmètre thermique et du débitmètre basé sur la pression pour déterminer si le débitmètre thermique n'est plus étalonné correctement.

15. Procédé selon la revendication 14, incluant en outre la fourniture d'un signal d'ajustement à décalage d'origine au débitmètre thermique lorsque la lecture en sortie du débitmètre thermique diffère de la lecture en sortie du débitmètre basé sur la pression d'une quantité prédéterminée.
